Europäisches Patentamt

European Patent Office

Office européen des brevets

(19)

(11) Numéro de publication: **0 350 346**
**A1**

## (12) DEMANDE DE BREVET EUROPEEN

(21) Numéro de dépôt: **89401637.7**

(22) Date de dépôt: **13.06.89**

(51) Int. Cl.5: **C 08 G 59/38**
C 08 G 59/30

(30) Priorité: **05.07.88 FR 8809066**

(43) Date de publication de la demande:
**10.01.90 Bulletin 90/02**

(84) Etats contractants désignés: **DE FR IT NL**

(71) Demandeur: **COMPAGNIE EUROPEENNE DE COMPOSANTS ELECTRONIQUES LCC**
**50, rue Jean-Pierre Timbaud**
**F-92400 Courbevoie (FR)**

(72) Inventeur: **Bernard, Gilles**
**THOMSON-CSF SCPI CEDEX 67**
**F-92045 Paris la Défense (FR)**

**Delaiande, François**
**THOMSON-CSF SCPI CEDEX 67**
**F-92045 Paris la Défense (FR)**

(74) Mandataire: **Guérin, Michel et al**
**THOMSON-CSF SCPI**
**F-92045 PARIS LA DEFENSE CEDEX 67 (FR)**

(54) **Matière thermodurcissable à base de résine époxyde.**

(57) La présente invention concerne une matière thermodurcissable à base de résine époxyde, comprenant un mélange d'au moins deux résines époxydes, la première étant un prépolymère diépoxyde bromé et la seconde étant une résine phénol-novolaque époxydée.
Application au moulage par injection liquide.

EP 0 350 346 A1

**Description**

## MATIERE THERMODURCISSABLE A BASE DE RESINE EPOXYDE

La présente invention concerne une matière thermodurcissable à base de résine époxyde, utilisable notamment pour le moulage par injection liquide.

Les composants électroniques tels que les condensateurs sont généralement enrobés d'une matière plastique destinée à les isoler et à les protéger de l'action des phénomènes qui pourraient nuire à leur fonctionnement : l'humidité, les agents chimiques agressifs, les chocs mécaniques ou électriques. On préfère réaliser l'enrobage des composants électroniques par une matière plastique thermodurcissable qui a l'avantage, après sa mise en oeuvre, d'être infusible et insoluble.

Les matières thermodurcissables sont des matériaux qui se transforment, par une réaction chimique, en des composés macromoléculaires tridimensionnels. Leur mise en oeuvre nécessite l'action de la chaleur. Contrairement aux matières thermoplastiques, la transformation chimique qui a conduit une matière thermodurcissable en une matière thermodurcie est irréversible. L'infusibilité des matières plastiques thermodurcies est d'une grande importance pour les composants électroniques.

On connaît différentes méthodes de moulage. Selon la méthode de moulage par compression, la matière à mouler est placée dans un moule chaud ouvert qui est ensuite fermé à l'aide d'une presse hydraulique. Sous l'action de la chaleur et de la pression imposée par la presse, la matière se fluidifie et prend la forme du moule. Cette méthode présente quelques inconvénients : immobilisations importantes de matériel, temps de cycle de moulage assez long, nécessité d'éliminer les bavures.

Selon la méthode de moulage par transfert, la matière à mouler passe d'une cavité ou pot de transfert, où la matière est comprimée et fluidifiée, à un moule chaud maintenu énergiquement fermé. Le transfert de la matière jusqu'au moule se fait grâce à des canaux usinés dans le moule. La pression exercée sur la matière pour assurer sa progression dans les canaux du moule contribue, à cause de phénomènes de friction, à son échauffement. Cette méthode procure un temps de cuisson plus court que la méthode de moulage par compression, mais encore trop important pour la fabrication de composants électroniques à cadence élevée. Elle nécessite l'application d'une pression plus élevée.

Selon la méthode de moulage par injection, la matière thermodurcissable est d'abord fluidifiée par chauffage, puis envoyée dans un moule. Elle n'a pu être mise en oeuvre qu'après l'apparition des presses à vis. Cette méthode permet une automatisation totale de la chaîne de moulage. Il n'y a ni manipulation, ni perte de temps entre la fin de la plastification et l'injection. C'est par cette méthode qu'on obtient les temps de cuisson les plus courts. Les inconvénients que présente cette méthode concernent l'usure importante de la vis et les déchets relativement importants dus aux longueurs de carottes restant dans le moule.

Dans l'application aux composants électroniques, c'est la méthode de moulage par injection qui apparaît la plus prometteuse. Elle permet une fabrication à cadence élevée, selon un cycle de moulage entièrement automatisé. Cependant, les inconvénients énumérés plus haut font que le moulage par transfert est encore largement utilisé à partir d'une résine polyépoxyde sous forme de poudre.

La demanderesse a été amenée, afin de permettre l'automatisation complète d'une chaîne de fabrication de condensateurs, à développer une matière thermodurcissable utilisable pour le moulage par injection liquide et destinée notamment à remplir des boîtiers de condensateurs. C'est à la suite de nombreux essais consistant à mélanger et à tester des résines déjà connues que la demanderesse est parvenue à mettre au point une matière permettant le moulage avec des pressions d'injection très faibles (0,2 à 1 MPa), des temps très courts (de 30 à 40 secondes) de polymérisation à des températures peu élevées (environ 100°C) et une durée de vie du mélange résine-durcisseur ("pot-life" dans la terminologie anglo-saxonne) assez longue (10 à 12 heures). Cette matière a pour avantage la suppression des nettoyages annexes de la tête d'injection, entre chaque cycle d'injection.

L'invention a donc pour objet une matière thermodurcissable à base de résine époxyde, caractérisée en ce qu'elle comprend un mélange d'au moins deux résines époxydes constituées par un prépolymère diépoxyde bromé ou première résine et une résine fabriquée à partir de résine phénol-novolaque époxydée ou seconde résine.

L'invention sera mieux comprise et d'autres avantages apparaîtront à la lecture de la description qui va suivre, donnée à titre d'exemple non limitatif.

La matière thermodurcissable selon l'invention est constituée à partir d'un mélange de résines auquel on ajoute des charges et des adjuvants. Le point essentiel de l'invention consiste dans le choix particulièrement critique des résines.

Pour obtenir une matière thermodurcissable utilisable pour un moulage par injection liquide, on a choisi de mélanger des résines époxydes généralement employées en tant que résines de coulée.

On mélangera au moins 2 résines époxydes. D'autres résines peuvent être ajoutées au mélange pour lui conférer des propriétés particulières.

La première résine époxyde (ou résine I) employée est un prépolymère diépoxyde bromé qui comprend trois constituants :
- le diglycidyl éther du bisphénol A (DGEBA),
- le diglycidyl éther du bisphénol A tétrabromé (DGEBtBr),
- un diluant réactif.

Le diluant réactif peut être l'un de ceux utilisés généralement avec les époxydes liquides : le butylglycidyléther, le carboxylate de glycidyle, l'époxy-1,2 époxyéthyl-4 cyclohexane, etc.

La seconde résine époxyde employée (ou résine II) est une résine fabriquée à partir de résine phénol-novolaque époxydée.

A titre d'exemple non limitatif, on peut utiliser comme résine I le produit commercialisé sous la marque Bakelite 0451 et comme résine II le produit commercialisé sous la marque Rutapox 0302.

Pour obtenir une matière thermodurcissable utilisable dans la pratique, on doit ajouter, au mélange des résines I et II, des charges et des adjuvants.

Le tableau I, placé en fin de description, donne un exemple de matière thermodurcissable selon l'invention avec le détail de tous ses constituants et leurs proportions en poids.

La résine Rutapox 0302 est beaucoup plus réactive que la résine Bakelite 0451, ce qui explique les différences de proportions de ces résines dans le mélange.

Les charges sont des substances inertes, minérales ou végétales, ajoutées à un polymère de base pour en modifier de manière sensible les propriétés mécaniques, électriques ou thermiques, pour améliorer l'aspect de surface ou bien, tout simplement, pour réduire le prix de revient de la matière à obtenir. Dans l'exemple détaillé dans le tableau I, trois charges minérales ont été utilisées : deux farines de silice référencées C 600 et C 400 et commercialisées par la Société SIFRACO, de l'alumine hydratée (marque FRF 30 de BACO/DEVINEAU). La silice C 600 a une granulométrie plus fine que la silice C 400, ce qui a pour objet d'éviter les blocages mécaniques dans les écoulements. Ces trois charges minérales permettent d'abaisser le prix de revient de la matière thermodurcissable et de lui conférer une tixotropie intéressante. Ainsi, la viscosité de la matière thermodurcissable qui est sensiblement constante entre 20 et 60°C, décroît fortement à partir de 60°C jusqu'à atteindre une valeur minimale vers 100°C. Les conditions d'utilisation de la matière thermodurcissable pourront être les suivantes :
- température de la matière au moment de l'injection dans le moule : entre 80 et 90°C,
- température du moule : supérieure à 100°C.

Les adjuvants sont destinés à modifier l'aspect de la matière thermodurcissable, ses propriétés physiques ou sa stabilité à l'environnement. Selon le tableau I, les adjuvants sont constitués par : un pigment minéral référencé LY 25 (commercialisé par la Société LAMBERT-RIVIERE), un agent minéral de silice expansée à fin d'ajustage de la tixotropie et référencé Aerosil 200 (commercialisé par la Société DEGUSSA), un agent antimousse référencé VP 203 (commercialisé par la Société BYCK MALINKRODT), un agent mouillant référencé GLYMO (de la Société DYNAFRANCE), un agent anti-bulle référencé BYK A 500 (commercialisé par la Société BYCK MALINKRODT).

Le pigment minéral est l'oxyde de fer $Fe_2O_3$. Il constitue une suspension de fines particules dans la matière thermodurcissable puis thermodurcie à laquelle il donne un coloris jaune ocre. En modifiant le degré d'oxydation de l'oxyde de fer, par exemple sous l'effet d'un rayon laser, on peut provoquer localement un changement de couleur de la matière thermodurcie et obtenir un marquage du composant moulé.

La préparation de la matière thermodurcissable peut être effectuée de la manière suivante. L'incorporation des adjuvants et des charges dans le mélange des résines se fait dans l'ordre où ils apparaissent dans le tableau I. Les temps de malaxage qui seront cités font référence à un poids de matière obtenue de l'ordre de 250 kg. On introduit d'abord les résines 1 et 2 dans un malaxeur et on mélange pendant environ 10 mn. On incorpore ensuite séparément les autres constituants, chaque incorporation se faisant sous malaxage ou étant suivi d'un malaxage :
- pour le produit 3 : 30 mn de malaxage environ,
- pour le produit 4 : 15 mn de malaxage environ,
- pour le produit 5 : 15 mn de malaxage environ,
- pour le produit 6 : 15 mn de malaxage environ,
- pour le produit 7 : 30 mn de malaxage après incorporation,
- pour le produit 8 : 30 mn de malaxage après incorporation,
- pour le produit 9 : 30 mn de malaxage après incorporation,
- pour le produit 10 : 30 mn de malaxage après incorporation.

La température à laquelle ont lieu ces différents malaxages est d'environ 60°C. Une fois que tous ces produits ont été incorporés, un nouveau malaxage est effectué pendant une heure à fins d'homogénéisation du mélange. A la fin de ce dernier malaxage, la température du mélange s'est stabilisée entre 50 et 60°C. On effectue alors un dégazage pour éliminer l'air incorporé au moment du mélange (30 mn sous agitation).

La matière ainsi obtenue peut être conservée très longtemps sous les conditions habituelles à ce type de matière. On a pu constater qu'au bout d'un an la matière thermodurcissable n'était pratiquement pas dégradée.

Avant utilisation de la matière thermodurcissable selon l'invention, on lui ajoutera un durcisseur. Parmi les durcisseurs utilisables, on peut citer ceux à base de complexes aminés du trifluorure de bore et en particulier celui commercialisé sous la désignation Anchor 1170 par la Société Anchor Italiana SPA. La proportion de ce durcisseur peut être de 5 à 15 % de la masse de matière thermodurcissable et préférentiellement 10 % . Le mélange matière thermodurcissable-durcisseur peut se faire à température ambiante. Sa durée de conservation est supérieure à 8 heures sous une température inférieure à 30°C.

A titre d'exemple d'utilisation, les conditions suivantes peuvent être remplies pour un moulage par l'injection liquide :
- pression d'injection : 0,2 à 1 MPa
- température de la matière dans le pot de stockage : 20°C
- température de la matière au moment de injection : 80 à 90°C
- température du moule : supérieure à 100°C
- temps de gélification de la matière : 25 secondes à 100°C.

A la place des résines I et II, il est possible d'utiliser d'autres résines ayant des caractéristiques proches. Par exemple, comme résine I, au lieu d'utiliser la résine Bakelite 0451 qui comprend 57 % de DGEBA, 12 % de DGEBtBr et 31 % de diluant, on aurait pu utiliser la résine Ciba 8043 qui comprend : 58 % de DGEBA, 10 % de DGEBtBr et 32 % de diluant.

La matière thermodurcissable selon l'invention peut être utilisable en particulier pour l'enrobage de composants électroniques tels que des condensateurs et également pour d'autres applications.

Parmi les autres applications possibles, on peut citer le moulage de circuits magnétiques pour selfs et transformateurs. Dans ce cas, la matière thermodurcissable comprendra une charge de poudre magnétique (ferrite par exemple).

| Numéro | Produit | Proportions |
|---|---|---|
| 1 | Bakelite 0451 | 90 |
| 2 | Rutapox 0302 | 10 |
| 3 | Aerosil 200 | 1 |
| 4 | VP 203 | 1 |
| 5 | Glymo  . | 0,5 |
| 6 | Byk A 500 | 0,95 |
| 7 | Silice C 600 | 45 |
| 8 | Silice C 400 | 20 |
| 9 | Alumine hydratée | 20 |
| 10 | LY 25 | 2 |

## Revendications

1 - Matière thermodurcissable à base de résine époxyde, caractérisée en ce qu'elle comprend un mélange d'au moins deux résines époxydes constituées par un prépolymère diépoxyde bromé ou première résine et une résine fabriquée à partir de résine phénol-novolaque époxydée ou seconde résine.

2 - Matière thermodurcissable selon la revendication 1, caractérisée en ce que la première résine comprend les trois constituants suivants :
- le diglycidyl éther du bisphénol A,
- le diglycidyl éther du bisphénol A tétrabromé,
- un diluant réactif.

3 - Matière thermodurcissable selon la revendication 2, caractérisée en ce que la première résine est la résine Bakelite 0451 ou la résine Ciba 8043.

4 - Matière thermodurcissable selon l'une des revendications 1 à 3, caractérisée en ce que la seconde résine est la résine Rutapox 0302.

5 - Matière thermodurcissable selon les revendications 3 et 4 prises ensemble, caractérisée en ce qu'elle comprend les constituants suivants :
- résine Bakelite 0451
- résine Rutapox 0302
- agent de tixotropie Aerosil 200
- agent anti-mousse VP 203
- agent mouillant Glymo
- agent anti-bulle Byk A 500
- silice C 600
- silice C 400
- alumine hydratée
- pigment $Fe_2O_3$.

6 - Matière thermodurcissable selon la revendication 5, caractérisée en ce que les proportions en poids du mélange de résines sont les suivantes : 90 % de Bakelite 0451 et 10 % de Rutapox 0302.

7 - Matière thermodurcissable selon l'une des revendications 5 ou 6, caractérisée en ce qu'on lui ajoute un durcisseur à base de complexes aminés du trifluorure de bore.

8 - Matière thermodurcissable selon la revendication 7, caractérisée en ce que le durcisseur est celui référencé Anchor 1170.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | EP-A-0 158 915 (IBM) <br> * Revendications * <br> --- | 1-8 | C 08 G 59/38 <br> C 08 G 59/30 |
| X | DE-A-1 520 268 (MICHIGAN CHEMICAL) <br> * Revendications; page 14, paragraphe 3 * <br> ----- | 1-8 | |

DOMAINES TECHNIQUES
RECHERCHES (Int. Cl.5)

C 08 G

Le présent rapport a été établi pour toutes les revendications

| Lieu de la recherche | Date d'achèvement de la recherche | Examinateur |
|---|---|---|
| LA HAYE | 09-10-1989 | DERAEDT G. |